# EUROPEAN PATENT APPLICATION

(11) **EP 3 053 677 A1**
(43) Date of publication of application: **10.08.2016**
(21) Application number: 16154027.3
(22) Date of filing: 03.02.2016
(51) Int. Cl.: B22F 3/105, B23K 26/324, B29C 67/00

(54) **HYBRID ADDITIVE MANUFACTURING METHOD FOR ROTOR**

(30) Priority: 03.02.2015 US 201514612923
(71) Applicant: Hamilton Sundstrand Corporation, Windsor Locks, CT 06096-1010 (US)
(72) Inventor: D'ORLANDO, Paul M., Simsbury, CT 06070 (US); VERSLUYS, Kiley James, Windsor, CT 06095 (US); FENNESSY, Colette O., Bloomfield, CT 06002 (US); MIRONETS, Sergey, Charlotte, NC 28202 (US); HIPSKY, Harold W., Willington, CT 06279 (US); DEVALVE, Timothy D., Manchester, CT 06040 (US)
(74) Representative: Bridge, Kerry Ann

(57) **Abstract**

A method of manufacturing a rotor having a hub (12) and a plurality of vanes (14) extending therefrom includes providing the hub, the hub having an outer surface, and depositing a laser cladding on the hub outer surface to form the plurality of vanes (14).

## Description

### BACKGROUND

The subject matter disclosed herein generally relates to turbomachinery rotors, and more specifically, hybrid additive manufacturing methods for fabricating turbomachinery rotors.

Current manufacturing technologies may limit the optimization of aerodynamic surfaces on components such as fan rotors used in aircraft systems. Known fan rotors are formed using traditional subtractive manufacturing to remove material from a block of metal such as aluminum or titanium. For example, the block of metal may be machined to produce the finished fan rotor. However, unused material is often discarded, costs are not recuperated, and the machining process may be expensive and time consuming.

### BRIEF SUMMARY

In one aspect, a method of manufacturing a rotor having a hub and a plurality of vanes extending therefrom is provided. The method includes providing the hub, the hub having an outer surface, and depositing a laser cladding on the hub outer surface to form the plurality of vanes.

In addition to one or more of the features described above, or as an alternative, further embodiments include: wherein the step of providing the hub comprises providing a block of material from which the hub will be formed, and machining the block of material to form the hub; wherein the step of depositing a laser cladding comprises depositing a first layer of laser cladding on the hub outer surface, subsequently machining the first layer, depositing a second layer of laser cladding on the machined first layer, and subsequently machining the second layer to form a first vane of the plurality of vanes on the hub outer surface; wherein the step of depositing a laser cladding comprises depositing a first layer of laser cladding on a first location of the hub outer surface, subsequently machining the first layer and depositing a second layer of laser cladding on a second location of the hub outer surface, subsequently machining the second layer and depositing a third layer of laser cladding on the machined first layer, subsequently machining the third layer of laser cladding to form a first vane of the plurality of vanes on the hub outer surface, and depositing a fourth layer of laser cladding on the machined second layer, and subsequently machining the fourth layer of laser cladding to form a second vane of the plurality of vanes on the hub outer surface; rotating the hub between the steps of depositing a first layer of laser cladding on a first location of the hub outer surface and subsequently machining the first layer and depositing a second layer of laser cladding on a second location of the hub outer surface; wherein the step of rotating the hub includes rotating the hub approximately 180°; and/or forming the first vane and the second vane on diametrically opposite sides of the hub.

In another aspect, a workstation for fabricating a rotor having a hub and a plurality of vanes extending therefrom is provided. The workstation includes a workpiece platform configured to hold the hub, a laser cladding device configured to deposit a laser cladding on the hub, and a vane machining device configured to machine the deposited laser cladding to form one or more vanes of the plurality of vanes.

In addition to one or more of the features described above, or as an alternative, further embodiments include: a hub machining device configured to machine a workpiece to form the hub; a measuring device configured to measure at least one of the hub and the plurality of vanes; a controller in signal communication with the workpiece platform, the laser cladding device, and the vane machining device, the controller programmed to deposit, with the laser cladding device, a first layer of laser cladding on the hub outer surface, subsequently machine the first layer with the vane machining device, deposit a second layer of laser cladding on the machined first layer, and subsequently machine the second layer to form a first vane of the plurality of vanes on the hub outer surface; a controller in signal communication with the workpiece platform, the laser cladding device, and the vane machining device, the controller programmed to deposit, with the laser cladding device, a first layer of laser cladding on a first location of the hub outer surface, subsequently machine the first layer with the vane machining device, and deposit a second layer of laser cladding on a second location of the hub outer surface, subsequently machine the second layer and deposit a third layer of laser cladding on the machined first layer, subsequently machine the third layer of laser cladding to form a first vane of the plurality of vanes on the hub outer surface, and deposit a fourth layer of laser cladding on the machined second layer, and subsequently machine the fourth layer of laser cladding to form a second vane of the plurality of vanes on the hub outer surface; wherein the controller is further programmed to rotate the hub between the steps of depositing a first layer of laser cladding on a first location of the hub outer surface and subsequently machining the first layer and depositing a second layer of laser cladding on a second location of the hub outer surface; and/or wherein rotating the hub comprises rotating the hub approximately 180°.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an exemplary completed fan rotor manufactured according to a hybrid additive manufacturing process;
FIG. 2 is a perspective view of a fan rotor hub of the completed fan rotor shown in FIG. 1;
FIG. 3 is a perspective view of a partially completed fan rotor;
FIG. 4 is a perspective view of a partially completed fan rotor;
FIG. 5 is a schematic view of an exemplary workstation for manufacturing the fan rotor shown in FIG. 1; and
FIG. 6 is a flow diagram of an exemplary method of manufacturing the fan rotor shown in FIG. 1.

The detailed description explains embodiments of the invention, together with advantages and features, by way of example with reference to the drawings.

### DETAILED DESCRIPTION

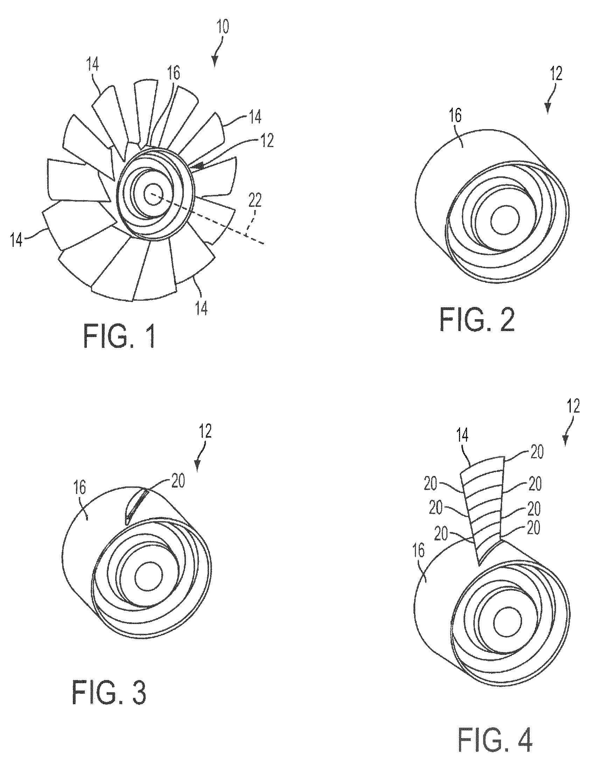

FIG. 1 illustrates an exemplary turbomachinery rotor 10 fabricated by a hybrid additive manufacturing process, as described herein in more detail. In one embodiment, rotor 10 may be a fan rotor 10. However, turbomachinery rotor 10 may be fabricated for various other components such as compressors, turbines, or the like. In the illustrated embodiment, rotor 10 is a fan rotor 10 having a hub 12 and a plurality of blades or vanes 14.

As shown in FIGS. 1-4, hub 12 includes an outer diameter surface 16 from which vanes 14 radially extend. Hub 12 is fabricated from a metal material by traditional machining, casting, forging, or other known manufacturing process.

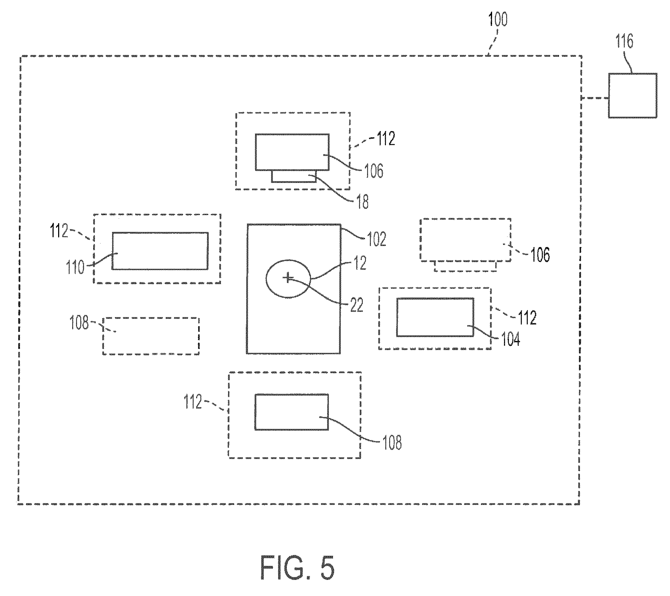

Vanes 14 are subsequently added to or formed on outer diameter surface 16 by additive manufacturing such as laser cladding material onto hub 12 with material feed wire or powder. Laser cladding by metal injection includes a laser 18 (FIG. 5) directing a laser beam down a passage in focused alignment with a flow of powdered metal (or feed wire), typically in a conical flow around the laser. Laser 18 melts both a thin layer of hub outer surface 16 and the metal powder/wire introduced to surface 16, allowing the molten powder/wire metal to fuse with outer surface 16 to form a first layer 20 (FIG. 3). Layers 20 of various thicknesses can be formed on hub 12 using laser cladding. For example, a layer 20 may be in a range of between 0.25 and 0.75 inches in a single pass. Multiple layers 20 may be formed on top of each other to form each vane 14 (see FIG. 4). Moreover, one layer 20 may comprise a plurality of sub-layers (not shown) formed using laser cladding.

During formation of vane 14, the metal deposition material builds-up on hub 12 to form an oversized vane 14 that is bonded to hub 12 at outer surface 16. The oversized vane 14 is larger than a desired vane size, and the oversized vane 14 is subsequently machined to the desired dimensions. In one example, the subsequent machining includes grinding, grit blasting, polishing, or other known machining methods to provide a smooth surface. Accordingly, the hybrid additive manufacturing process includes machining hub 12, forming a plurality of vanes 14 on hub 12 via a laser cladding process, and machining vanes 14 to a desired shape and size.

FIG. 5 is a schematic view of an exemplary workstation 100 for carrying out the hybrid additive manufacturing process. Workstation 100 generally includes a workpiece platform 102, one or more hub machining devices 104, one or more laser cladding devices 106, one or more vane machining devices 108, and a measuring device 110.

Workpiece platform 102 is configured to secure or hold hub 12 during the manufacture of fan rotor 10. Workpiece platform 102 may be configured to spin or rotate hub 12 along one or more axes during the manufacturing process. In one embodiment, workpiece platform 102 holds a metal block while hub machining device 104 forms hub 12 therefrom. Laser cladding device 106 is configured to deposit multiple layers 20 onto hub 12 to form each vane 14. Vane machining device 108 is configured to machine oversized vanes 14 to form a desired shape and size for each vane 14. For example, vane machining device 108 may remove superficial layers of oversized vane 14 to maintain a desired airfoil profile and/or remove surface disparities or surface porosity in order to form the desired vane contour.

During formation, each partially completed vane 14 may be alternated between laser cladding 106 and vane machining device 108. As such, a first layer 20 of a first vane 14 may be formed on hub 12. That first layer 20 may subsequently be machined by device 108 while laser cladding device 106 forms a first layer 20 of a second vane 14. A second layer 20 of the first vane 14 may then be formed on the machined first layer 20 while vane machining device 108 machines the first layer 20 of the second vane 14. The process may be alternated until the multiple layers 20 are deposited and machined to form the first and second vanes 14. Additional vanes 14 may then be formed in the same manner. In alternate embodiments, rather than deposition of a single layer 20 followed by machining, a plurality of layers 20 may be formed or deposited on hub 12 before being machined by device 108. In one embodiment, the first vane 14 and the second vane 14 are formed on diametrically opposed sides of hub 12 by rotating hub 12 to alternate the opposed first and second vanes 14 between oppositely oriented devices 106, 108. In one embodiment, a second set of opposed devices 106, 108 are utilized such that four vanes 14 may be simultaneously formed on hub 12.

In one embodiment, laser cladding device 106 and vane machining devices 108 are stationary and workpiece platform 102 rotates hub 12 about an axis 22 (FIG. 1) to enable devices 106, 108 to work on various areas around the circumference of hub 12. In other embodiments, laser cladding device 106 and vane machining device 108 are independently movable relative to workpiece platform 102 to work on hub 12.

In another embodiment, hub machining device 104, laser cladding device 106, vane machining device 108, and measuring device 110 may all be located in independent workstations 112 (FIG. 5), and a robot or other component (e.g., platform 102) may move hub 12 from workstation to workstation 112 as fan rotor 10 is formed. In this way, most or all of workstations 112 may be constantly operated and multiple fan rotors 10 may be fabricated in a short period of time.

Workstation 100, 114 may include a controller 116 programmed to control the hybrid manufacturing process and one or more of devices 102 to 110. As such, controller 116 may be in signal communication with devices 102, 104, 106, 108, and 110. As used herein, the term controller refers to an application specific integrated circuit (ASIC), an electronic circuit, a processor (shared, dedicated, or group) and memory that executes one or more software or firmware programs, a combinational logic circuit, and/or other suitable components that provide the described functionality.

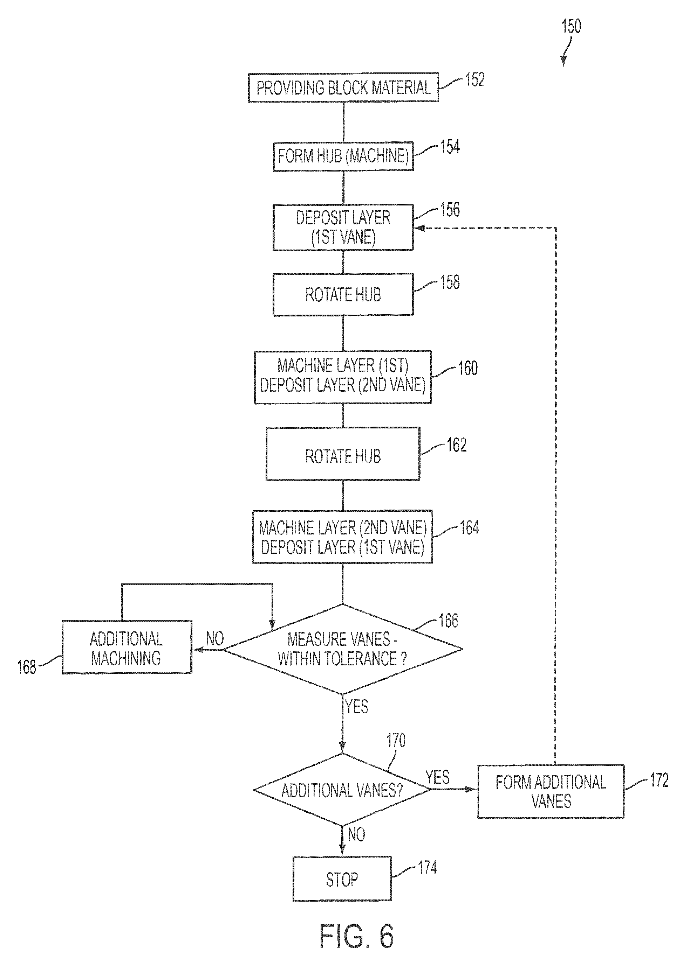

FIG. 6 illustrates an exemplary method 150 of manufacturing fan rotor 10. Method 150 includes, at step 152, providing a block of material from which hub 12 will be formed. At step 154, the block of material is machined with machining device 104 to form hub 12. At step 156, a laser cladding layer 20 of a first vane 14 is deposited or formed on hub 12 with laser cladding device 106. At step 158, hub 12 is rotated (e.g., 180°) such that previously deposited layer 20 is positioned proximate vane machining device 108.

At step 160, vane machining device 108 machines the previously formed layer 20 of the first vane 14 while laser cladding device 106 forms a new layer 20 of a second vane 14 on hub 12. At step 162, hub 12 is rotated to its previous position (e.g., approximately 180°) such that the machined layer 20 of the first vane 14 is positioned proximate the laser cladding device 106 and the newly formed layer 20 of the second vane 14 is positioned proximate vane machining device 108.

At step 164, vane machining device 108 machines the previously formed second layer 20 of the first vane 14 while laser cladding device 106 forms a second layer 20 of the first vane 14 on the previously machined first layer 20. Steps 158 to 164 may be repeated until the first and second vanes 14 are completed. As such, each vane 14 is formed by forming a layer 20, machining the layer 20, forming another layer 20 on the previously machined layer 20, and machining the newly formed layer 20, and so on. The process is repeated until a vane 14 having a desired size and shape is formed.

At step 166, completed vanes 14 may be measured by measuring device 110 to confirm if the vane 14 is within a predetermined tolerance of size and shape for that specific vane 14. If measured vane 14 is not within the predetermined tolerance, at step 168, vane 14 may undergo additional machining by vane machining device 108. If measured vane 14 is within the predetermined tolerance, at step 170, it is determined if additional vanes 14 need to be formed on hub 12. If additional vanes 14 are required, at step 172, steps 156 to 164 are performed to create additional vanes 14 on hub 12. If additional vanes 14 are not required, the method ends at step 174.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of manufacturing a rotor (10) having a hub and a plurality of vanes (14) extending therefrom, the method comprising:
providing the hub (12), the hub having an outer surface; and
depositing a laser cladding on the hub outer surface to form the plurality of vanes (14).

2. The method of claim 1, wherein the step of providing the hub (12) comprises:
providing a block of material from which the hub (12) will be formed; and
machining the block of material to form the hub.

3. The method of claim 1, wherein the step of depositing a laser cladding comprises:
depositing a first layer (20) of laser cladding on the hub outer surface;
subsequently machining the first layer (20);
depositing a second layer (20) of laser cladding on the machined first layer; and
subsequently machining the second layer to form a first vane of the plurality of vanes on the hub outer surface.

4. The method of claim 1, wherein the step of depositing a laser cladding comprises:
depositing a first layer of laser cladding on a first location of the hub outer surface;
subsequently machining the first layer (20) and depositing a second layer of laser cladding on a second location of the hub outer surface;
subsequently machining the second layer and depositing a third layer of laser cladding on the machined first layer;
subsequently machining the third layer (20) of laser cladding to form a first vane (14) of the plurality of vanes on the hub outer surface, and depositing a fourth layer of laser cladding on the machined second layer; and
subsequently machining the fourth layer (20) of laser cladding to form a second vane (14) of the plurality of vanes on the hub outer surface.

5. The method of claim 4, further comprising rotating the hub (12) between the steps of depositing a first layer of laser cladding on a first location of the hub outer surface and subsequently machining the first layer and depositing a second layer of laser cladding on a second location of the hub outer surface.

6. The method of claim 5, wherein the step of rotating the hub (12) includes rotating the hub approximately 180°.

7. The method of claim 4, further comprising forming the first vane (14) and the second vane on diametrically opposite sides of the hub (12).

8. A workstation (100) for fabricating a rotor having a hub (12) and a plurality of vanes (14) extending therefrom, the workstation comprising:
a workpiece platform (102) configured to hold the hub (12);
a laser cladding device (106) configured to deposit a laser cladding on the hub (12); and
a vane machining device (108) configured to machine the deposited laser cladding to form one or more vanes of the plurality of vanes (14).

9. The workstation of claim 8, further comprising a hub machining device (104) configured to machine a workpiece to form the hub.

10. The workstation of claim 8, further comprising a measuring device (110) configured to measure at least one of the hub and the plurality of vanes.

11. The workstation of claim 8, further comprising a controller in signal communication with the workpiece platform, the laser cladding device (106), and the vane machining device (108), the controller programmed to:
deposit, with the laser cladding device, a first layer (20) of laser cladding on the hub outer surface;
subsequently machine the first layer with the vane machining device (108);
deposit a second layer (20) of laser cladding on the machined first layer; and
subsequently machine the second layer to form a first vane of the plurality of vanes on the hub outer surface.

12. The workstation of claim 8, further comprising a controller in signal communication with the workpiece platform, the laser cladding device, and the vane machining device, the controller programmed to:
deposit, with the laser cladding device (106), a first layer of laser cladding on a first location of the hub outer surface;
subsequently machine the first layer with the vane machining device (108), and deposit a second layer of laser cladding on a second location of the hub outer surface;
subsequently machine the second layer and deposit a third layer of laser cladding on the machined first layer;
subsequently machine the third layer of laser cladding to form a first vane of the plurality of vanes on the hub outer surface, and deposit a fourth layer of laser cladding on the machined second layer; and
subsequently machine the fourth layer of laser cladding to form a second vane of the plurality of vanes on the hub outer surface.

13. The workstation of claim 12, wherein the controller is further programmed to rotate the hub (12) between the steps of depositing a first layer of laser cladding on a first location of the hub outer surface and subsequently machining the first layer and depositing a second layer of laser cladding on a second location of the hub outer surface.

14. The workstation of claim 13, wherein rotating the hub (12) comprises rotating the hub approximately 180°.
